# EUROPEAN PATENT SPECIFICATION

(11) **EP 1 924 428 B1**
(45) Date of publication and mention of the grant of the patent: **21.12.2011**
(21) Application number: 06802804.2
(22) Date of filing: 31.08.2006
(51) Int. Cl.: B29D 11/00, B29C 45/42

(54) **DEVICES AND METHODS FOR EVALUATING ALIGNMENT OF AN END OF ARM TOOL AND A MOLDING APPARATUS**
VORRICHTUNGEN UND VERFAHREN ZUR BEWERTUNG DER AUSRICHTUNG EINES ENDES EINES ARMWERKZEUGS UND FORMVORRICHTUNG
DISPOSITIFS ET PROCEDES POUR EVALUER L'ALIGNEMENT D'UN OUTIL TERMINAL ET D'UN APPAREIL DE MOULAGE

(30) Priority: 12.09.2005 US 224188
(43) Date of publication of application: 28.05.2008
(73) Proprietor: Johnson and Johnson Vision Care, Inc., Jacksonville, FL 32256 (US)
(72) Inventor: LITWIN, Michael W., Jacksonville, Florida 32221 (US); YOUNGBLOOD, Jeffrey, Jacksonville, Florida 32259 (US)
(74) Representative: Tunstall, Christopher Stephen
(86) International application number: PCT/US2006/034229
(87) International publication number: WO 2007/032935

(56) References cited:
- EP-A1- 0 042 960
- EP-A1- 1 085 389
- US-B1- 6 202 031
- US-B1- 6 502 876

## Description

### FIELD OF THE INVENTION

The present invention relates generally to molding operations, such as injection molding. More particularly, the invention relates to devices and a methods for evaluating the alignment of a molding apparatus, such as a mold, and an end of arm tool used to transfer molded pieces to or from the molding apparatus.

### BACKGROUND OF THE INVENTION

Soft contact lenses are typically formed using a two-piece mold composed of a front curve and a back mold half. The front and back mold halves are positioned so that they are spaced apart in a predetermined relationship. A monomeric material in liquid form is introduced into the gap between the front and back mold halves. The monomeric material, upon curing, forms the contact lens. The molding surface of each of the front and back mold halves are configured to shape the lens in a particular manner, so that the lens possesses optical properties that produce a desired vision correction in the end user.

The front and back mold halves are typically formed by injection molding. Once formed, the front and back mold halves are removed from the mold and transferred to the production line. Alternatively, the mold halves may be stored until needed in the production operation.

The relatively large production volumes of a typical contact lens production operation requires that front and back mold halves be manufactured on a nearly continuous basis. For example, in some production operations, one set of eight front and back mold halves is manufactured every two and one-half to three seconds. This rate of production requires that the newly-formed front and back mold halves be transferred from the mold relatively quickly.

Transfer of the front and back curves from the mold is typically accomplished using a robotic arm, and an end of arm tool ("EOAT") mounted on the arm. The EOAT is equipped with an array of vacuum pickups for gripping a set of the front and back mold halves.

The front and back mold halves are usually formed within cavities in the in injection molding mold. The arm moves the pickup array to a position at which each pickup is positioned above an associated cavity. The arm lowers the EOAT so that the pickups each come into contact with, and grip a front or back curve. The arm then raises the EOAT so that the front and back mold halves are lifted from the cavities. The arm subsequently rotates to position the BOAT and the pickups over a carryover inlay nest or other device suitable for receiving the front and back mold halves. The arm then lowers the EOAT so that the front and back mold halves can be positioned on the carryover inlay nest and released from their associated pickups.

The small size of the front and back mold halves requires relatively close alignment of the pickups and the front and back mold halves as the pickups come into contact with their associated front and back mold halves. For example, the pickups and the mold cavities that hold the front and back curves may need to be aligned to within +/-1.0 millimeter. Substantial misalignment can result in frequent misfeeds of the front and back mold halves, and an attendant decrease in the throughput of the production process.

The EOAT, its attached pickups and the mold are usually aligned during the initial set up of the robotic arm. Due to its criticality, the alignment is usually checked on a period basis thereafter, or when misfeeds or other malfunctions begin to occur with a particular frequency.

The alignment of the BOAT and the mold is usually evaluated and adjusted based on sight or based on a visual observation of the relative positions of the pickups and their associated cavities in the mold. The visual observation is usually made by a technician or other individual servicing the arm and the EOAT. This technique may not produce the requisite degree of alignment precision for a number of reasons. For example, the relatively small size of the pickups in relation to the surface of the mold can make it difficult to precisely align the pickups and their associated cavities. Moreover, this alignment technique relies on a subjective judgment on the part of the technician.

The EOAT and the mold can also be aligned using special tooling. In particular, the production BOAT can be removed from the arm and replaced with specially designed aluminum alignment pieces. The production mold can likewise be removed and replaced with a specially-designed mold tool. The alignment pieces are configured to fit within the mold tool when the arm is properly positioned so that the production BOAT and molds when replaced, will be in a state of alignment. The replacement of the production BOAT and mold with the special tooling required to perform this alignment technique can require substantial time and effort, and can result in substantial interruptions in the production process.

Consequently, a need exists for a device and a method for closely aligning an end of arm tool with a mold, without substantially interrupting production operations. US 6,502,876 discusses the use of a spacer which is placed between a mould half and a gripper. The distance between the mould half and the gripper is thereby increased without reducing the gripping strength. In this way, damage to the mould half or the contact lens is avoided, and alignment of the gripper to the mould half is simplified.

### BRIEF DESCRIPTION OF THE DRAWINGS

For the purpose of illustrating the invention, the drawings show an embodiment that is presently preferred. The invention is not limited, however, to the specific instrumentalities disclosed in the drawings. In the drawings:
Fig. 1 is a top view of a preferred embodiment of a fixture for evaluating alignment of a molding apparatus and an end of arm tool;
Fig. 2 is a cross-sectional side view of the fixture shown in Fig. 1, taken through the line "A-A" of Fig. 1;
Fig. 3 is a top perspective view of the fixture shown in Figs. 1 and 2;
Fig. 4 is a bottom perspective view of the fixture shown in Figs. 1-3;
Fig. 5 is a side view of the fixture shown in Figs. 1-4, depicting the fixture in use to align a mold and an end of arm tool;
Fig. 6 is a side cross-sectional side view of the fixture, the mold, and the end of arm tool shown in Figs. 1-5,
Fig. 7 is a top view of an injection molding system comprising the fixture, the mold, and the end of arm tool shown in Figs. 1-6, an arm for supporting and moving the end of arm tool, and a carryover inlay nest for receiving front and back curves made in the mold;
Fig. 8 is a side view of a back curve that can be formed using the mold depicted in Figs. 6 and 7;
Fig. 9 is a top view of an alternative embodiment of the fixture shown in Figs. 1-7;
Fig. 10 is a top view of another alternative embodiment of the fixture shown in Figs. 1-7;
Fig. 11 is a top view of another alternative embodiment of the fixture shown in Fig. 1-7;
Fig. 12 is a top view of another alternative embodiment of the fixture shown in Figs. 1-7; and
Fig. 13 is a top view of another alternative embodiment of the fixture shown in Figs. 1-7.

### DETAILED DESCRIPTION OF ILLUSTRATIVE EMBODIMENTS

The invention provides methods and devices for evaluating an alignment of an end of arm tool and a molding apparatus by determining whether pickups of the end of arm tool can be received by cups of the devices when the devices are disposed on the molding apparatus.

The present invention provides fixtures and methods as recited in the claims.

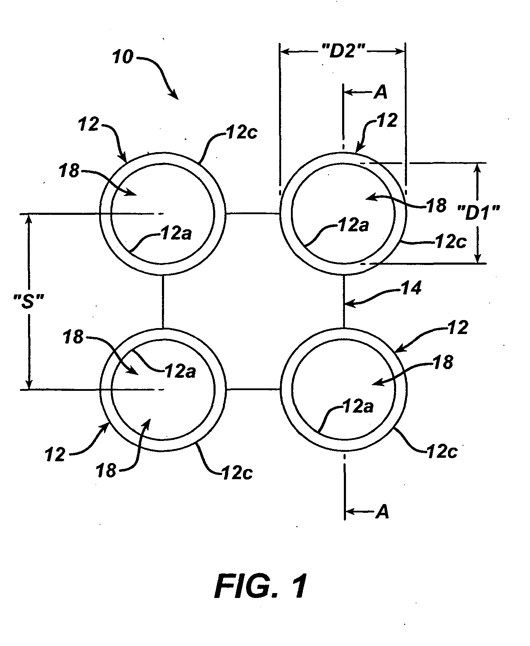

Figures 1-7 depict a preferred embodiment of a fixture 10. The fixture 10 can be used to align an end effector, or end of arm tool (EOAT) 106 with a molding apparatus for moulding contact lens mould halves such as a mold 104.

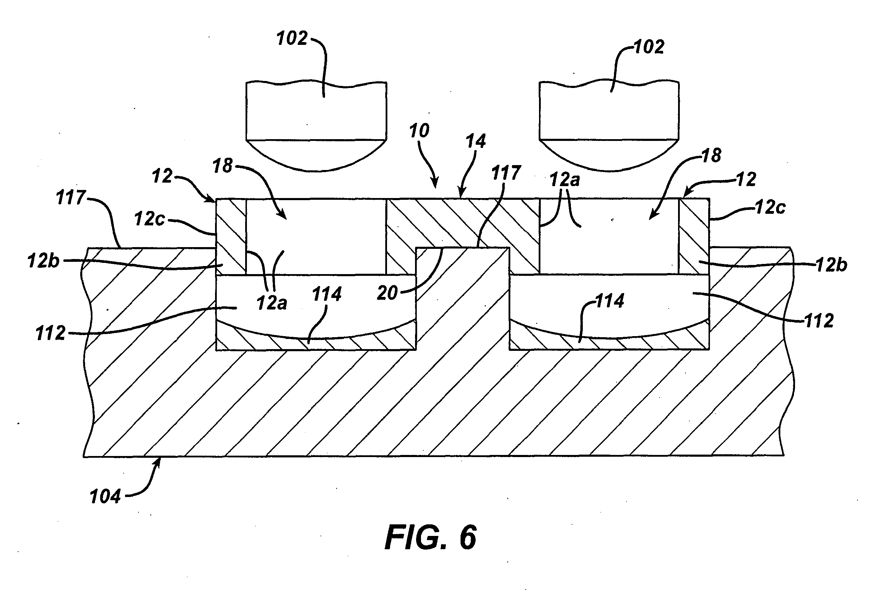

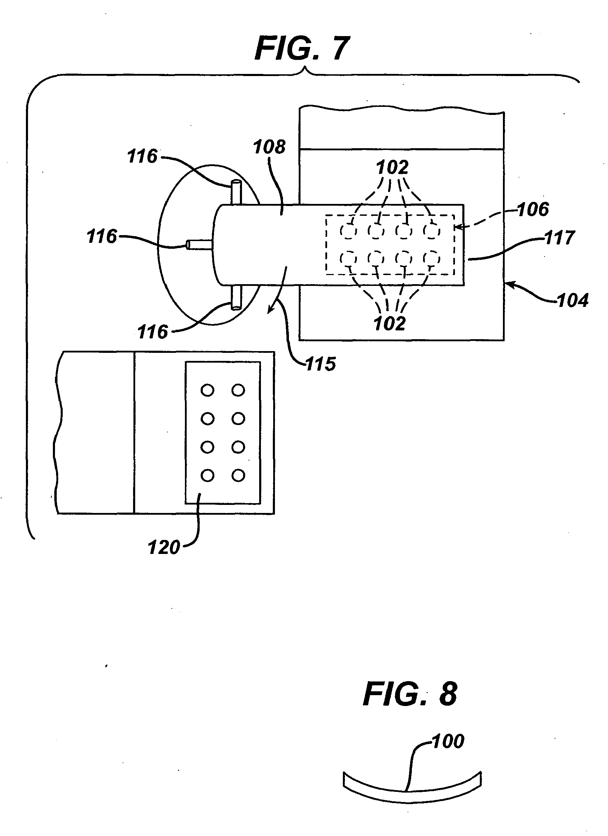

The mold 104 is used to form front and back mold halves 110 by injection molding (see Figure 8). The mold 104 has a plurality of cavities 112 formed therein (see Figure 6). Each cavity 112 accepts a mold half insert 114. The mold half insert 114 helps to form the associated front or back mold half110 into a desired shape. The desired shape of the front or back mold half 110 is determined by the desired optical properties of the contact lens that the front or back mold half 110 will subsequently be used to manufacture.

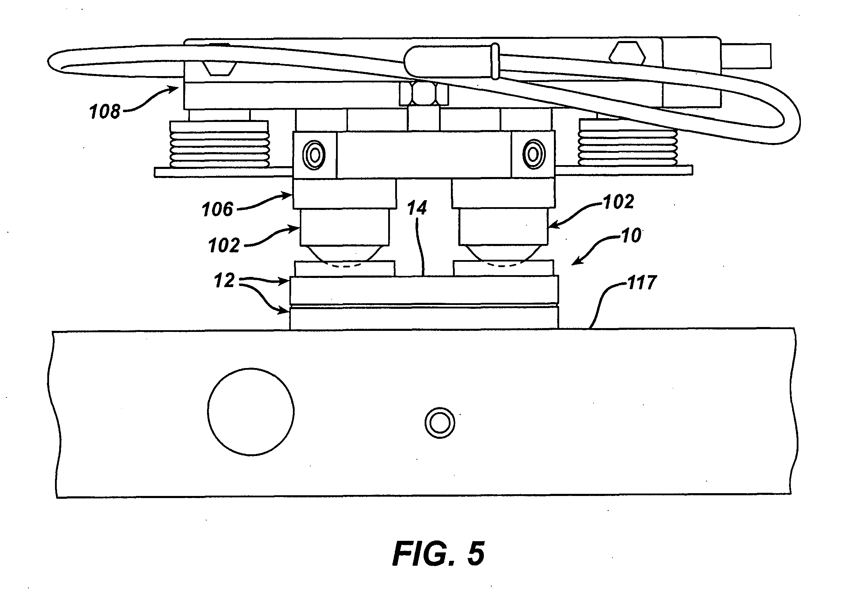

The EOAT 106 is mounted on an end of a robotic arm 108 as shown in Figures 5 and 7. The EOAT 106 includes eight suction cups, or vacuum pickups 102 arranged in two rows. The arm 108 articulates in the direction denoted by the arrow 115 in Figure 7, to bring the pickups 102 into contact with the newly-formed front and back mold halves 110 in the mold 104.

The pickups 102 are in fluid communication with a vacuum source (not shown). Each pickup 102 includes vacuum ports that allow the pickup 102 to grip an associated front or back mold half 110 by way of a suction force generated by the vacuum source.

The arm 108 can lift the EOAT 106 and the attached front and back mold halves 110, to remove the front and back mold halves 110 from their associated cavities 112 in the mold 104. (The eight cavities 112 serviced by the EOAT 106 can be used, for example, to form four front curves 110 and four back mold halves 110.)

The arm 108 can then rotate approximately ninety degrees to position the EOAT 106 and the front and back mold halves 110 over a carryover inlay nest 120 (or other suitable device for receiving the front and back mold halves 110) (see Figure 7). The arm 108 can subsequently lower the EOAT 106 and the attached front and back curves 110 so that the front and back mold halves 110 are positioned on the carryover inlay nest 120, and released from the pickups 102. The front and back mold halves 110 can then be conveyed or otherwise transported on the carryover inlay nest 120 to another location in the production facility.

Specific details concerning the structure and operation of the EOAT 106, the arm 108, and the mold 104 are presented for exemplary purposes only. The fixture 10 can be used in connection with other types of end of arm tools, robotic arms, and molds. Moreover, the fixture 10 can be employed in connection with molds used to form objects other than front and back mold halves.

The device 10 preferably has four substantially cylindrical cups 12, and a centrally-located web portion 14 adjoining each of the cups 12, as shown in Figures 1-4. The device 10 can be unitarily formed, using a suitable process such as injection molding. The device 10 is preferably formed from a relatively soft material, such as DuPont DELRIN®, to help minimize the potential for the device to scratch the mold 104.

Each cup 12 has an inner circumferential surface 12a. The inner circumferential surface 12a defines a volume 18 within the cup 12. The upper and lower ends of the volume 18 are open.

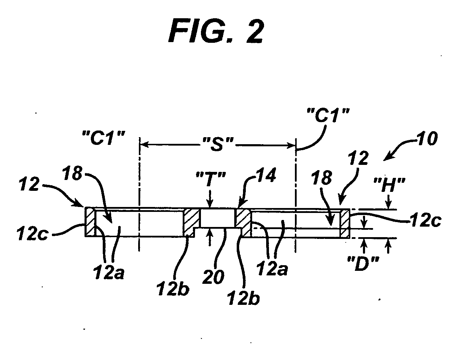

Directional terms such as "upward," "downward," "top," "bottom," "above," "below," and the liketh reference to the component orientations depicted in Figure 2. These terms are used for illustrative purposes only, and are not meant to limit the scope of the appended claims.

The cup 12 has a diameter "D1" defined by an inner circumferential surface 12a of the cup 12 (see Figure 1). The diameter D1 is preferably chosen so that one of the pickups 102 can be positioned within the volume 18, with minimal clearance between the inner circumferential surface 12a and the outer periphery of the pickup 102. For example, the diameter D1 can be approximately 17.200 mm (0.67717 inch). A diameter D1 of this value will result in a nominal clearance of approximately 0.1 mm (0.004 inch) between the inner circumferential surface 12a and the outer periphery of the pickup 102.

Specific dimensions for the fixture 10 are presented for exemplary purposes only. The dimensions of the fixture 10 are application-dependent, since the dimensions of the fixture 10 are tailored to the dimensions of the particular pickups 102 and mold 104 with which the fixture 10 is intended for use.

The cups 12 have a height "H" greater than a thickness "T" of the web portion 14 (see Figure 2). In other words, a lower portion 12b of each cup 12 projects downward in relation to the web portion 14, as shown in Figures 2, 4, and 6. The distance by which the lower portion 12b projects downwardly in relation to a lower surface 20 of the web 14 is denoted by the reference character "D" in Figure 2. This feature permits the lower portion 12b of each cup 12 to be received by a corresponding cavity 112 in the mold 104.

For example, the height H can be approximately 10.000 mm (0.39370 inch), and the thickness T can be approximately 8.0000 mm (0.31496 inch). Hence, the downward projection D of the lower portion 12b can be approximately 2.000 mm (0.078740 inch).

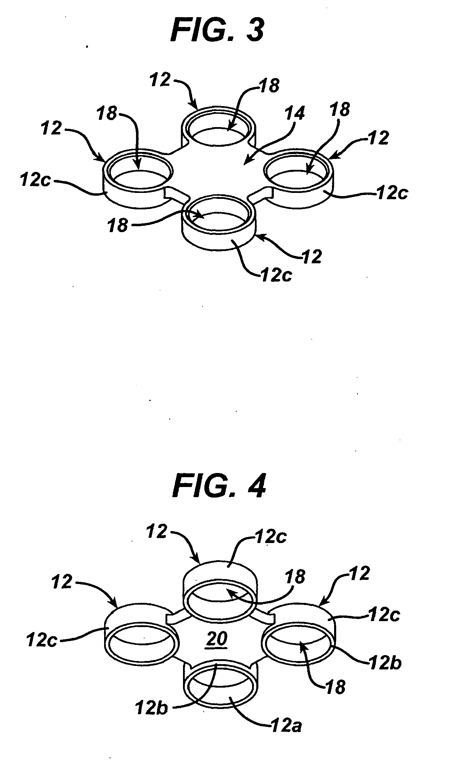

Each cup 12 has an outer circumferential surface 12c. The portion of the outer circumferential surface 12c associated with the lower portion 12b extends continuously around the lower portion 12b, as shown in Figure 4. The lower portion 12b has an outer diameter "D2" defined by the outer circumferential surface 12c (see Figure 1).

The diameter D2 is preferably chosen so that minimal clearance exists between the outer circumferential surface 12c and the periphery of the cavity 112, when the lower portion 12b is inserted into to the cavity 112 as shown in Figure 6. For example, the outer diameter D2 can be approximately 20.900 mm (0.82283 inch). A diameter D2 of this value will result in a nominal clearance of approximately 0.1 mm (0.004 inch) between the outer circumferential surface 12c and the periphery of the cavity 112.

The cups 12 are depicted as being cylindrically-shaped to match the shape of the cavities 112 and the pickups 102. Alternative embodiments of the fixture 10 can include cups having different shapes, e.g., square or rectangular, to match the shape of the cavities and pickups with which the fixture is intended to be used.

The device 10 can be used to evaluate the alignment of four of the pickups 102 with four of the cavities 112. (As the relative positions of the eight pickups 102 on the EOAT 106 are fixed, and the relative positions of the cavities 112 on the mold 104 likewise are fixed, aligning four of the pickups 102 with four of the cavities 112 aligns all eight of the pickups 102 with their associated cavities 112.)

The positional relationship between adjacent cups 12 is substantially identical to the positional relationship between adjacent pickups 102, and between adjacent cavities 112 in the mold 104. In other words, the center to center spacing "S" between adjacent cups 12, i.e., the spacing between the centerline "C1" of adjacent cups 12, is approximately the same as the center-to-center spacing between adjacent pickups 102, and between adjacent cavities 112 (see Figure 2). For example, the spacing S can be approximately 30.000 mm (1.1811 inch).

The fixture 10 can be used to align the EOAT 106 and the mold 104, or to verify that the mold 104 and the EOAT 106 are properly aligned, as follows. The fixture 10 can be positioned over the mold 104, so that the lower portions 12b of the four cups 12 are each aligned with a respective one of the cavities 112. (As the center to center spacing S of the cups 12 is substantially identical to the center to center spacing of the cavities 112, the cups 12 can be aligned with four of the cavities 112 on a simultaneous basis.)

The fixture 10 can then be lowered so that the lower portions 12b each drop into a respective cavity 112, until the bottom surface 20 of the web portion 14 contacts an upper surface 117 of the mold 104 as shown in Figure 6. Each lower portion 12b extends into its associated cavity 112 by the distance D, i.e., by approximately 2.000 mm (0.78740 inch), at the point the bottom surface 20 contacts the upper surface 117.

Each lower portion 12b is sized to fit within the associated cavity 112 with minimal clearance between the outer circumferential surface 12c, and the periphery of the cavity 112, as discussed above. Hence, inserting the lower portions 12b into the associated cavities 112 substantially fixes the position of the fixture 10 in relation to the mold 104.

The fixture 10 is preferably positioned on the mold 104 so that two of the lower portions 12b are disposed in two of the outermost cavities 112, i.e., the cavities 112 closest to the edge of the mold 112, as shown in Figure 5. Positioning the fixture 10 in this manner can help ensure that the user has the best possible visual perspective of the positional relationship between the pickups 102 and the fixture 10.

The EOAT 106 can subsequently be brought into proximity with the fixture 10. More particularly, the arm 108 can be activated, or manipulated manually, to bring each pickup 102 into proximity with an associated one of the cups 12, as depicted in Figures 5 and 6.

The pickups 102 can be lowered into their associated cups 12, if it appears that the pickups 102 are aligned with their associated cups 12, i.e., if it appears that each pickup 102 will drop into the volume 18 in its associated cup 12 without substantially contacting the cup 12. The center to center spacing S of the cups 12 is substantially identical to the center to center spacing between the pickups 102, as noted above. Moreover, the diameter D1 of each cup 12 is sized so that the cup 12 can receive an associated pickup 102 with minimal clearance therebetween. Hence, the ability of each cup 12 to receive its associated pickup 102 indicates that the EOAT 106 is properly aligned with the mold 104.

The position of the EOAT 106 in relation to the mold 104 can be adjusted, if it appears that the pickups 102 will not drop into their respective cups 12 when the EOAT 106 is lowered, i.e., it if appears that the pickups 102 will substantially contact the fixture 10 as the EOAT 106 is lowered.

The position of the EOAT 106 in relation to the mold 104 can be adjusted by adjusting the position of the arm 108. More particularly, the arm 108 is configured to stop upon reaching a predetermined position in relation to the mold 104, so that the EOAT 106 can be lowered to pick up the front and back mold halves 110. This position can be adjusted using features, such as turnbuckles 116, on the arm 108 (see Figure 7). The position of the arm 108 can be adjusted until it appears that the pickups 102 are aligned with their respective cups 12.

The EOAT 106 can be lowered after the positional adjustment has been performed, so that the pickups 102 become disposed within the volume 18 within their associated cups 12. Further adjustments can be performed, if needed, until each pickup 102 moves into the volume 18 in its associated cup 12 without substantially contacting the cup 12.

The EOAT 106 and the mold 104, it is believed, can be aligned more precisely when the fixture 10 is used in lieu of alignment techniques performed on an exclusively visual basis. More precise alignment of the EOAT 106 and the mold 104 can potentially reduce the frequency of misfeeds during production of the front and back curves 110, thereby improving the throughput of the production process.

It is believed that the set-up time for the EOAT 106 and the arm 108 can be reduced by using the fixture 10 to conduct the alignment process, in comparison to other alignment techniques. Moreover, the number of iterations needed to obtain satisfactory alignment of the EOAT 106 and the mold 104 can potentially be reduced when using the fixture 10 to align the EOAT 106 and the mold 104.

Moreover, the reception of the pickups 102 by the cups 12 when the EOAT 106 and the mold 104 are aligned provides a positive, objective indication that the EOAT 106 and the mold 104 are aligned. Alignment performed on a strictly visual basis, by contrast, relies on the subjective judgment of the individual performing the alignment.

The fixture 10 can be installed without removing or disassembling the EOAT 106 or the mold 104, and without the use of any tooling or additional parts. Hence, the time, effort, and delays associated with removing the production EOAT 106 and mold 104, and installing specially designed alignment equipment in lieu thereof can be avoided through the use of the fixture 10.

The fixture 10 can also be used to align the EOAT 106 with the carryover inlay nest 120, using substantially the same technique discussed above in relation to the mold 104. The term "molding apparatus," as used in the specification and claims, is intended to encompass carryover inlay nests such as the carryover inlay nest 120, in addition to molds such as the mold 104.

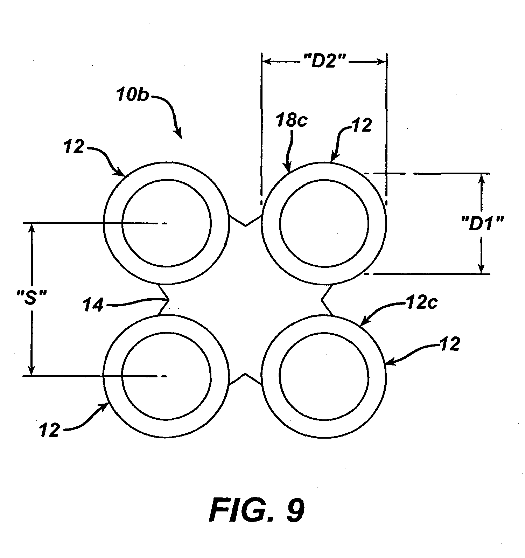

Figure 9 depicts an alternative embodiment of the fixture 10 in the form of a fixture 10a. The fixture 10a is substantially identical to the fixture 10, with the exception that the outer diameter D2 of the lower portion 12b is sized to fit mold cavities (not shown) having a larger diameter than the cavities 112 of the mold 104. In particular, the outer circumferential surface 12c is sized so that the outer diameter D2 of the lower portion 12b is approximately 24.300 mm (0.95669 inch).

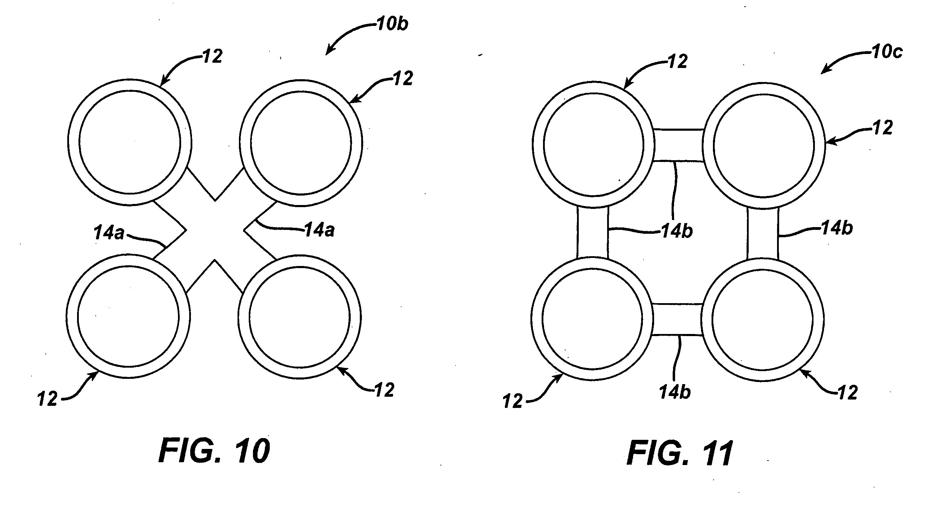

Figure 10 depicts another alternative embodiment of the fixture 10 in the form of a fixture 10b. The fixture 10b has a web portion 14a formed differently than the web portion 14 of the fixture 10. The fixture 10b is otherwise substantially identical to the fixture 10. Figure 11 depicts another alternative embodiment in the form of a fixture 10c. The fixture 10c has a web portion 14b configured differently than the web portion 14 of the fixture 10. The fixture 10c is otherwise substantially identical to the fixture 10.

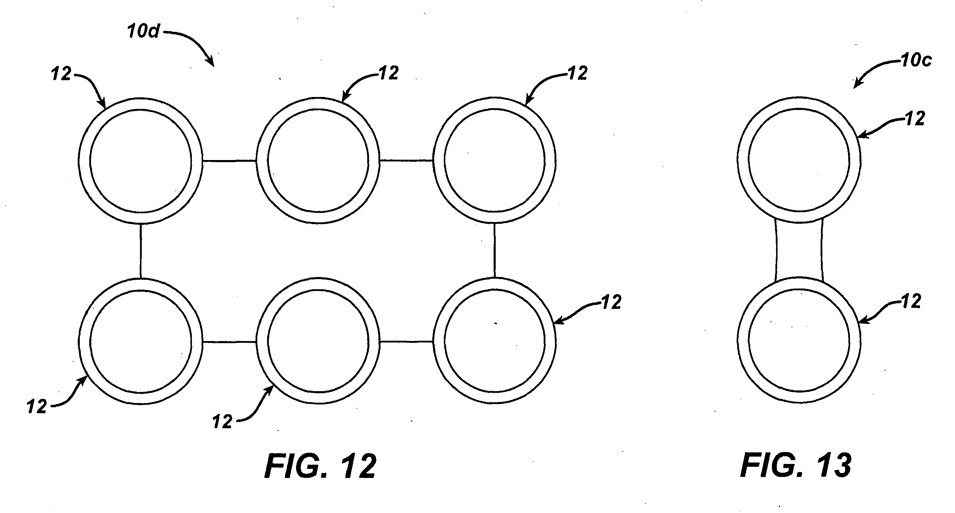

Other alternative embodiments of the fixture 10 can be formed with more, or less than eight of the cups 12. For example, Figure 12 depicts a fixture 10d having six of the cups 12. Figure 13 shows a fixture 10e having two of the cups 12.

## Claims

1. A fixture (10) comprising a web portion (14), and a first and a second cup (12) attached to the web portion, wherein the first and second cups (12) each define a volume (18) for receiving respective first and second pickups (102) of an end of arm tool (106), and the first and second pickups (102) can be received by the volumes defined by the respective first and second cups (12) only when the end of arm tool (106) is substantially aligned with a molding apparatus (104) for molding contact lens mold halves;
**characterized in that** the first and second cups (12) each have a portion (12b) capable of being received in respective first and second cavities (112) formed in the molding apparatus (104); and a center to center spacing of the first and second cups (12) is substantially equal to a center to center spacing of the first and second cavities (112) so that the portions (12b) of the first and second cups (12) can be received by the respective first and second cavities (112).

2. The fixture of claim 1, wherein the first and second cups (12) each adjoin the web portion (14).

3. The fixture of claim 1, wherein the first and second cups (12) and the web portion (14) are unitarily formed.

4. The fixture of claim 1, wherein the portions (12b) of the first and second cups (12) are sized to produce a predetermined nominal clearance between the portions of the first and second cups (12) and a perimeter of the respective first and second cavities (112) when the portions (12b) of the first and second cups (12) are disposed in the respective first and second cavities (112).

5. The fixture of claim 4, wherein the volumes defined by the respective first and second cups (12) are sized to produce a predetermined nominal clearance between perimeters of the volumes defined by the portions of the first and second cups (12) and the respective first and second pickups (102) when the first and second pickups (102) are disposed within the respective first volumes defined by the respective first and second cups (12).

6. The fixture of claim 5, wherein the predetermined nominal clearance between the portions (12b) of the first and second cups (12) and a perimeter of the respective first and second cavities (112) is approximately 0.1 mm (0.004 inch), and the predetermined nominal clearance between perimeters of the volumes defined by the portions (12b) of the first and second cups (12) and the respective first and second pickups (102) is approximately 0.1 mm (0.004 inch).

7. The fixture of claim 1, wherein the first and second cups (12) are substantially cylindrical.

8. The fixture of claim 1, wherein the portions (12b) of the first and second cups (12) project downward in relation to a lower surface (20) of the web (14) so that the portions (12b) of the first and second cups (12) can extend into the respective first and second cavities (112) when a lower surface (20) of the web (14) rests on an upwardly facing surface (117) of the molding apparatus (104) from which the first and second cavities (112) extend.

9. The fixture of claim 1, further comprising a third and a fourth of the cups (12) adjoining the web (14) for receiving a third and a fourth of the pickups (102) when the end of arm tool (106) is substantially aligned with the molding apparatus (104).

10. A method for evaluating alignment of a molding apparatus (104) for molding contact lens mold halves and an end of arm tool (106), comprising placing a fixture (10) on a surface of the molding apparatus (104); and determining whether a first and a second cup (12) of the fixture (10) can receive a respective first and second pickup (102) of the end of arm tool (106) if the end of arm tool (106) is moved toward the fixture;
**characterized in that** the method further comprises:
placing the fixture (10) so that a first and a second portion (12b) of the fixture become disposed in a respective first and second cavity (112) of the molding apparatus (104).

11. A method for positioning an arm (106) of an injection molding system, comprising:
the method steps of claim 10, wherein the first and second portions (12b) are first and second projections (12b), the projections extending into the respective first and second cavities (112) when the fixed is placed on the surface of the molding apparatus (104), the molding apparatus being a mold (104); and
wherein if the result of the determination step of claim 10 is negative, adjusting a position of the arm in relation to the mold (104) until a first and a second pickup (102) of an end of arm tool (106) mounted on the arm can each enter a volume defined by the respective first and second cups (12) without substantial interference between the first and second pickups (102) and the respective first and second cups (12).

## Patentansprüche

1. Vorrichtung (10), die einen Stegabschnitt (14) sowie eine erste und eine zweite Schale (12), die am Stegabschnitt befestigt sind, umfasst, wobei die ersten und zweiten Schalen (12) jeweils ein Volumen (18) definieren, das jeweilige erste und zweite Entnahmeelemente (102) eines Endes eines Armwerkzeugs (106) aufnehmen kann, und wobei die ersten und zweiten Entnahmeelemente (102) von den durch die jeweiligen ersten und zweiten Schalen (12) definierten Volumen nur aufgenommen werden können, wenn das Ende des Armwerkzeugs (106) im Wesentlichen zu einer Formvorrichtung (104) zum Formen von Kontaktlinsenformhälften ausgerichtet ist;
**dadurch gekennzeichnet, dass** die ersten und zweiten Schalen (12) jeweils einen Abschnitt (12b) haben, der von entsprechenden ersten und zweiten Kavitäten (112), die in der Formvorrichtung (104) ausgebildet sind, aufgenommen werden kann; und dass ein Mittenabstand der ersten und zweiten Schalen (12) im Wesentlichen einem Mittenabstand der ersten und zweiten Kavitäten (112) entspricht, so dass die Abschnitte (12b) der ersten und zweiten Schalen (12) von den jeweiligen ersten und zweiten Kavitäten (112) aufgenommen werden können.

2. Vorrichtung nach Anspruch 1, bei der die ersten und zweiten Schalen (12) jeweils an den Stegabschnitt (14) angrenzen.

3. Vorrichtung nach Anspruch 1, bei der die ersten und zweiten Schalen (12) und der Stegabschnitt (14) als eine Einheit ausgebildet sind.

4. Vorrichtung nach Anspruch 1, bei der die Abschnitte (12b) der ersten und zweiten Schalen (12) so dimensioniert sind, dass ein vorbestimmter Nennabstand zwischen den Abschnitten der ersten und zweiten Schalen (12) und einem Umfang der jeweiligen ersten und zweiten Kavitäten (112) hergestellt wird, wenn sich die Abschnitte (12b) der ersten und zweiten Schalen (12) in den jeweiligen ersten und zweiten Kavitäten (112) befinden.

5. Vorrichtung nach Anspruch 4, bei der die von den jeweiligen ersten und zweiten Schalen (12) definierten Volumen so dimensioniert sind, dass ein vorbestimmter Nennabstand zwischen Umfängen der von den Abschnitten der ersten und zweiten Schalen (12) definierten Volumen und der jeweiligen ersten und zweiten Entnahmeelemente (102) hergestellt wird, wenn sich die ersten und zweiten Entnahmeelemente (102) innerhalb der von den jeweiligen ersten und zweiten Schalen (12) definierten jeweiligen ersten Volumen befinden.

6. Vorrichtung nach Anspruch 5, bei der der vorbestimmte Nennabstand zwischen den Abschnitten (12b) der ersten und zweiten Schalen (12) und einem Umfang der jeweiligen ersten und zweiten Kavitäten (112) etwa 0,1 mm (0,004 Zoll) beträgt, und wobei der vorbestimmte Nennabstand zwischen Umfängen der von den Abschnitten (12b) der ersten und zweiten Schalen (12) definierten Volumen und der jeweiligen ersten und zweiten Entnahmeelemente (102) etwa 0,1 mm (0,004 Zoll) beträgt.

7. Vorrichtung nach Anspruch 1, bei der die ersten und zweiten Schalen (12) im Wesentlichen zylindrisch sind.

8. Vorrichtung nach Anspruch 1, bei der die Abschnitte (12b) der ersten und zweiten Schalen (12) im Verhältnis zu einer unteren Oberfläche (20) des Stegs (14) nach unten vorspringen, so dass die Abschnitte (12b) der ersten und zweiten Schalen (12) in die jeweiligen ersten und zweiten Kavitäten (112) hineinragen können, wenn eine untere Oberfläche (20) des Stegs (14) auf einer nach oben gewandten Oberfläche (117) der Formvorrichtung (104), von der aus sich die ersten und zweiten Kavitäten (112) erstrecken, aufliegt.

9. Vorrichtung nach Anspruch 1, die weiterhin einen dritten und einen vierten der an den Steg (14) angrenzenden Schalen (12) umfasst, um ein drittes und ein viertes der Entnahmeelemente (102) aufzunehmen, wenn das Ende des Armwerkzeugs (106) im Wesentlichen zur Formvorrichtung (104) ausgerichtet ist.

10. Verfahren zur Bewertung der Ausrichtung einer Formvorrichtung (104) zum Formen von Kontaktlinsenformhälften und eines Endes des Armwerkzeugs (106), das Folgendes umfasst: Platzieren einer Vorrichtung (10) auf einer Oberfläche der Formvorrichtung (104); und Bestimmen, ob eine erste und zweite Schale (12) der Vorrichtung (10) ein jeweiliges erstes und zweites Entnahmeelement (102) des Endes eines Armwerkzeugs (106) aufnehmen kann, wenn das Ende des Armwerkzeugs (106) hin zur Vorrichtung bewegt wird;
**dadurch gekennzeichnet, dass** das Verfahren weiterhin Folgendes umfasst:
Platzieren der Vorrichtung (10), so dass ein erster und ein zweiter Abschnitt (12b) der Vorrichtung in einer jeweiligen ersten und zweiten Kavität (112) der Formvorrichtung (104) angeordnet werden.

11. Verfahren zum Positionieren eines Arms (106) eines Spritzgießsystems, das Folgendes umfasst:
die Verfahrensschritte nach Anspruch 10, bei denen die ersten und zweiten Abschnitte (12b) erste und zweite Vorsprünge (12b) sind, wobei sich die Vorsprünge in die jeweiligen ersten und zweiten Kavitäten (112) hinein erstrecken, wenn die Vorrichtung auf der Oberfläche der Formvorrichtung (104) platziert ist, wobei die Formvorrichtung ein Formwerkzeug (104) ist, und wobei, wenn das Ergebnis des Schrittes des Bestimmens nach Anspruch 10 negativ ist, eine Position des Arms im Verhältnis zum Formwerkzeug (104) ausgerichtet werden kann, bis ein erstes und ein zweites Entnahmeelement (102) eines Endes des am Arm montierten Armwerkzeugs (106) jeweils in ein von den jeweiligen ersten und zweiten Schalen (12) definiertes Volumen hinein gelangen können, ohne dass es zwischen den ersten und zweiten Entnahmeelementen (102) und den jeweiligen ersten und zweiten Schalen (12) zu einer wesentlichen Beeinträchtigung kommt.

## Revendications

1. Montage (10) comprenant une partie (14) en feuille et des premières et des deuxièmes cuvettes (12) reliées à la partie en feuille, dans lequel les premières et les deuxièmes cuvettes (12) définissent chacune un volume (18) de réception de premiers et de deuxièmes prélèvements (102) respectifs d'une extrémité d'un outil (106) à bras, les premiers et les deuxièmes prélèvements (102) pouvant être repris dans les volumes définis par les premières et les deuxièmes cuvettes (12) respectives uniquement lorsque l'extrémité de l'outil (106) à bras est essentiellement alignée sur un appareil (104) de moulage qui moule des moitiés de moulage de lentilles de contact,
**caractérisé en ce que**
les premières et les deuxièmes cuvettes (12) présentent chacune une partie (12b) qui peut être reprise dans des premières et des deuxièmes cavités (112) respectives formées dans l'appareil (104) de moulage, un centre de centrage de l'écartement des premières et des deuxièmes cuvettes (12) coïncidant essentiellement avec un centre de centrage de l'écartement des premières et des deuxièmes cavités (112) de telle sorte que les parties (12b) des premières et des deuxièmes cuvettes (12) puissent être reprises par les premières et les deuxièmes cavités (112) respectives.

2. Montage selon la revendication 1, dans lequel les premières et les deuxièmes cuvettes (12) sont chacune contiguës par rapport à la partie (14) en feuille.

3. Montage selon la revendication 1, dans lequel les premières et les deuxièmes cuvettes (12) et la partie (14) en feuille sont formées d'un seul tenant.

4. Montage selon la revendication 1, dans lequel les parties (12b) des premières et des deuxièmes cuvettes (12) sont dimensionnées de manière à former un jeu nominal prédéterminé entre des parties des premières et des deuxièmes cuvettes (12) et un périmètre des premières et des deuxièmes cavités (112) respectives lorsque les parties (12b) des premières et des deuxièmes cuvettes (12) sont placées dans les premières et les deuxièmes cavités (112) respectives.

5. Montage selon la revendication 4, dans lequel les volumes définis par les premières et les deuxièmes cuvettes (12) respectives sont dimensionnés de manière à former un jeu nominal prédéterminé entre les périmètres des volumes définis par les parties des premières et des deuxièmes cuvettes (12) et les premiers et les deuxièmes prélèvements (102) respectifs lorsque les premiers et les deuxièmes prélèvements (102) sont placés dans les premiers volumes respectifs définis par les premières et les deuxièmes cuvettes (12) respectives.

6. Montage selon la revendication 5, dans lequel le jeu nominal prédéterminé entre les parties (12b) des premières et des deuxièmes cuvettes (12) et un périmètre des premières et des deuxièmes cavités (112) respectives vaut approximativement 0,1 mm (0,004 pouce), le jeu nominal prédéterminé entre les périmètres des volumes définis par les parties (12b) des premières et des deuxièmes cuvettes (12) et les premiers et les deuxièmes prélèvements (102) respectifs valant approximativement 0,1 mm (0,004 pouce).

7. Montage selon la revendication 1, dans lequel les premières et les deuxièmes cuvettes (12) sont essentiellement cylindriques.

8. Montage selon la revendication 1, dans lequel les parties (12b) des premières et des deuxièmes cuvettes (12) débordent vers le bas par rapport à une surface inférieure (20) de la feuille (14) de telle sorte que les parties (12b) des premières et des deuxièmes cuvettes (12) puissent s'étendre dans les premières et les deuxièmes cavités (112) respectives lorsqu'une surface inférieure (20) de la feuille (14) repose sur une surface (117) tournée vers le haut de l'appareil (104) de moulage et depuis laquelle les premières et les deuxièmes cavités (112) s'étendent.

9. Montage selon la revendication 1, comprenant de plus une troisième et une quatrième cuvette (12) contiguës à la feuille (14) qui reçoivent des troisièmes et des quatrièmes prélèvements (102) lorsque l'extrémité de l'outil (106) à bras est essentiellement alignée sur l'appareil (104) de moulage.

10. Procédé d'évaluation de l'alignement entre un appareil (104) de moulage qui moule des demi-moules de lentilles de contact et une extrémité d'un outil (106) à bras, comprenant l'étape qui consiste à placer un montage (10) sur une surface de l'appareil (104) de moulage et à déterminer si des premières et des deuxièmes cuvettes (12) du montage (10) peuvent recevoir des premiers et des deuxièmes prélèvements (102) respectifs de l'extrémité de l'outil (106) à bras lorsque l'extrémité de l'outil (106) à bras est déplacée vers le montage,
**caractérisé en ce que**
le procédé comprend de plus l'étape qui consiste à :
placer le montage (10) de telle sorte que les premières et les deuxièmes parties (12b) du montage soient placées dans des premières et des deuxièmes cavités (112) respectives de l'appareil (104) de moulage.

11. Procédé de positionnement d'un bras (106) d'un dispositif de moulage par injection, comprenant les étapes du procédé de la revendication 10, dans lequel les premières et les deuxièmes parties (12b) sont des premières et des deuxièmes saillies (12b), les saillies s'étendant dans les premières et les deuxièmes cavités (112) respectives lorsque le montage est placé sur la surface de l'appareil (104) de moulage, l'appareil de moulage étant un moule (104),
le procédé comprenant l'étape qui consiste à ajuster la position du bras par rapport au moule (104) jusqu'à ce que des premiers et des deuxièmes prélèvements (102) d'une extrémité d'un outil (106) à bras monté sur le bras puissent chacune entrer dans un volume défini par les premières et les deuxièmes cuvettes (12) respectives sans interférence essentielle entre les premiers et les deuxièmes prélèvements (102) et les premières et les deuxièmes cuvettes (12) si le résultat de l'étape de détermination de la revendication 10 est négatif.
